# EUROPEAN PATENT SPECIFICATION

(11) **EP 4 544 265 B1**
(45) Date of publication and mention of the grant of the patent: **29.07.2026**
(21) Application number: 22737608.4
(22) Date of filing: 22.06.2022
(51) Int. Cl.: G01C 15/00

(54) **PORTABLE CASING FOR LAND SURVEYING APPLICATIONS AND METHOD THEREOF**
TRAGBARES GEHÄUSE FÜR LANDVERMESSUNGSANWENDUNGEN UND VERFAHREN DAFÜR
BOÎTIER PORTATIF POUR APPLICATIONS D'ARPENTAGE ET PROCÉDÉ ASSOCIÉ

(43) Date of publication of application: 30.04.2025
(73) Proprietor: Trimble Inc, Westminster CO 80021 (US)
(72) Inventor: SVANHOLM, Set, 191 49 Sollentuna (SE)
(74) Representative: AWA Sweden AB
(86) International application number: PCT/EP2022/067063
(87) International publication number: WO 2023/247031

(56) References cited:
- WO-A2-2012/099821
- US-A1- 2004 135 545
- US-A1- 2018 355 638

## Description

### TECHNICAL FIELD

The present invention relates to a portable casing for land surveying applications (particularly for transporting a surveying instrument, or machine, configured to perform land surveying measurements) and a method for controlling charging of a plurality of batteries in such a portable casing.

### BACKGROUND

Generally, land surveying involves the determination of terrestrial (e.g., two-dimensional, 2D, or three-dimensional, 3D) positions of points and the determination of distances and angles between these points. Land surveying may include 3D scanning by taking measurements of a scene such as a building, a worksite, and surroundings to obtain a 3D cloud of measured points (e.g., based on measured distance and angle from the surveying instrument to these points) over vertical and azimuthal angular limits.

For this purpose, a surveyor may use a surveying instrument, such as a robotic total station integrating an electronic distance measurement unit (EDM unit) with a movable centre unit (or telescope) for rotation about at least two axes (typically a trunnion, or horizontal, axis and an azimuth, or vertical, axis). The centre unit may be mounted on an alidade for rotation about a first axis (e.g., the trunnion axis) and the alidade may be mounted on a base for rotation about a second axis (e.g., the azimuth axis) intersecting (e.g., being orthogonal to) the first axis, such that the instrument optical axis is rotatable about a rotation point. The surveying instrument may also be a geodetic scanner typically including a rotating mirror to scan the optical axis of the instrument at a high speed in a vertical direction. The rotating mirror may be mounted on a scan head rotating azimuthally about another axis at low speed.

For operation of these surveying instruments such as, for example, for driving motors causing motion of their rotatable parts (such as e.g., the centre unit, alidade, rotating mirror, or scan head of these instruments), electrical power is necessary. However, in many scenarios, land surveying is to be performed at places where mains electricity is not available and electrical power needs to be provided to the surveying instruments using a battery housed in a part of the surveying instrument.

**In** addition, land surveying may involve long-time measurements, such as for example scanning of larger worksites or tracking of targets, or a long sequence of (e.g., programmed) measurements during which the surveying instrument should preferably not run out of electrical power. For such large-scale and/or long-term mapping, measurement or tracking work, a surveyor needs to bring extra batteries to the field to replace discharged batteries and ensure that the instrument will not run out of electrical power. Further, surveyors often want a fully charged battery at every setup to minimize the risk of running out of power in the middle of a measurement, why a half full battery often is replaced by a fully charged battery and the half full battery is brought to the office for charging.

In view of the present situation, battery management for land surveying applications is not optimized and there is still a need for new solutions facilitating the handling of batteries and/or improving management of battery resources for land surveying applications.
An example of prior art may be found in US2018/355638 relating to a protective case.

### SUMMARY

The present disclosure seeks to provide at least some embodiments that overcome at least some of the above-mentioned drawbacks. More specifically, the present disclosure aims at providing at least some embodiments offering an improved management of battery resources for land surveying applications. To achieve this, a portable casing for transporting a surveying instrument and a method having the features as defined in the independent claims are provided. Further advantageous embodiments of the present disclosure are defined in the dependent claims.

According to a first aspect, there is provided a portable casing for a surveying instrument, wherein the portable casing includes a primary compartment for lodging the surveying instrument and a plurality of secondary compartments for housing a plurality of rechargeable batteries. The portable casing also includes a charging unit arranged in the casing and electrically connected to the plurality of compartments for transferring electrical energy to and/or from the plurality of rechargeable batteries. A control unit of the portable casing is configured to obtain information about the state of charge of each of the plurality of rechargeable batteries arranged in the plurality of secondary compartments, and control, based on the obtained information, an inter-charging function of the charging unit to cause, among batteries of the plurality of rechargeable batteries that have a state of charge below a first threshold, a lesser discharged battery to receive electrical energy from at least one more discharged battery.

Embodiments according to the first aspect of the present disclosure provide a solution for battery management integrated in the casing used for transporting the surveying instrument. Rather than only providing compartments or sections within the casing at which batteries may be arranged for being transported to a worksite together with the surveying instrument, an inter-charging function for improving battery management is included in the portable casing disclosed herein. With this inter-charging function, a battery that has a higher state of charge (i.e., a lesser discharged battery) receives electrical energy from a battery that has a lower state of charge (i.e., a more discharged battery). Hence, the present embodiments provide a portable casing with a "top-up" charging function such that a lesser discharged battery becomes even more charged. Phrased differently, a more discharged battery is, or more discharged batteries are, discharged even more to the benefit of a lesser discharged battery, or lesser discharged batteries. This is beneficial for land surveying applications, particularly for long-time measurements or a long sequence of measurements, for which it is preferable to mount an even more charged battery in the surveying instrument. Accordingly, the surveying instrument may be provided with power during a longer period of time, without the need of replacing the battery.

Embodiments according to the first aspect of the present disclosure provides a portable casing including a charging unit with inter-charging function in which electrical energy from batteries having a lower (e.g., a too low) state of charge is used to charge other batteries having a higher state of charge to an even higher capacity. As mentioned above, with the embodiments according to the first aspect of the present disclosure, the need to often change battery and bring an excessive number of batteries to the field is removed, or at least reduced, since the operator is provided with at least one battery that is more charged, and preferably charged as much as possible.

The first threshold may for example be 100%, in which case all batteries located in the plurality of secondary compartments may in principle be involved in the inter-charging function. However, in other examples, the first threshold may be 80% or 90%, in which case only the batteries having a state of charge lower than 80% or 90%, respectively, may be involved. In these examples, it may be considered that batteries having a state of charge above a certain first threshold (such as e.g., 80% or 90%) are sufficiently charged for long-time measurements (or a long sequence of measurements) and/or that charging such batteries to an even higher level of state of charge might damage the health of the batteries.

According to the present embodiments, if three batteries with respective states of charge of 30%, 70% and 90% are arranged in the casing and the first threshold is 80%, then the charging unit is configured to transfer electrical energy from the battery having a state of charge of 30% to the battery having a state of charge of 70%.

In case there were four batteries and two of them would have a state of charge of 70%, the charging unit could arbitrarily select one of these two batteries for transferring electrical energy from the battery having a lower state of charge (30% in the above example) to the selected battery.

In some implementations, the batteries having a state of charge above a second threshold may belong to a first group and the batteries having a state of charge below the second threshold may belong to a second group. The control unit may then be configured to cause a battery of the second group to provide electrical energy to a battery of the first group. As a result, the batteries of the first group will become even more charged while the batteries of the second group will become even less charged. Hence, rather than having a plurality of batteries at different medium charging levels, wherein none of them may be sufficiently charged to electrically support the complete operation of a long sequence of measurements by a surveying instrument, the batteries of the first group will reach a higher capacity level and may thereby be used for such applications.

In some implementations, the control unit may be configured to cause the least discharged battery to receive electrical energy from the other batteries of the plurality of batteries arranged in the portable casing. Accordingly, the control unit may be configured to determine the least discharged battery and provide this battery with electrical energy from the other batteries.

In some implementations, the control unit may be configured to cause the most discharged battery to provide electrical energy to the least discharged battery. Still based on the purpose of obtaining batteries having a higher (or highest) state of charge in the portable casing and sacrificing the more discharged batteries, which would not be selected for long time measurements or long sequence of measurements, the control unit may, in the present implementations, select the most discharged battery and transfer the electrical energy of this most discharged battery to the least discharged battery. In an example in which only two batteries are arranged in the portable casing, the more discharged battery would provide electrical energy to the less discharged battery. In general, considering examples with more than two batteries at different states of charge, the control unit may cause the most discharged battery to provide its electrical energy to the least discharged battery.

In some implementations, the control unit may be configured to cause the lesser discharged battery to receive electrical energy from the more discharged battery until a discharging threshold for the state of charge of the more discharged battery is reached or until a charging threshold for the state of charge of the lesser discharged battery is reached.

For example, the control unit may be configured such that the more discharged battery is not discharged below a state of charge of 10%. Using a discharging threshold for the batteries providing their electrical energy to anther battery ensures that they are not discharged below a level at which they may be damaged, or at which they may not be recharged (at all, or properly, i.e., within a reasonable time frame).

Further, the control unit may be configured such that a lesser discharged battery, such as for example the least discharged battery, is not charged above a charging threshold, e.g., 80% or 90%, since charging a battery above a certain level may also be detrimental for its operational lifetime. It will be appreciated that the charging threshold may be the same as the first threshold mentioned above.

In some implementations, the control unit may be configured to cause the second most discharged battery to provide electrical energy to the least discharged battery on a condition that the state of charge of the most discharged battery has reached the discharging threshold and the state of charge of the least discharged battery has not reached the charging threshold. Phrased differently, once the most discharged battery has been emptied, the control unit is configured to select the second most discharged battery to provide electrical energy to the least discharged battery, should it still require electrical energy, i.e., if the state of charge of the least discharged battery is still below the charging threshold.

In some implementations, the portable casing may further comprise a connector for electrical connection of the charging unit to a power-driven unit of the surveying instrument. On a condition that the charging unit is connected to the power-driven unit, the control unit may then be configured to control the charging unit to supply electrical energy to the power-driven unit from the batteries having the lowest states of charge first and subsequently from a less discharged battery. In other words, although the present embodiments provide the possibility for a surveyor to install a battery arranged in the portable casing, such as the least discharged battery, in the surveying instrument for performing a measurement, the portable casing may also be equipped with a connector, or connecting means, for directly connecting the portable casing to the surveying instrument and thereby provide electrical power to the surveying instrument.

In such a situation, still for the purpose of keeping a battery that is charged as much as possible in the portable casing, the control unit may, in some implementations, be configured to first use power from the batteries having the lowest states of charge and only subsequently use the more charged batteries (or less discharged ones), and particularly use the least discharged battery as a last resource of power.

The connector or connecting means may include one of a physical connector and/or a wireless/inductive charging connector. The physical connector and the wireless/inductive charging connector may for example be arranged in a side cover of the portable casing.

The control unit may be configured to first cause the most discharged battery to provide electrical energy to the power-driven unit of the surveying instrument until a discharging threshold (which may be the same as the discharging threshold already mentioned above) for the state of charge of the most discharged battery is reached. It will be appreciated that the control unit may then be configured to cause the second most discharged battery to provide electrical energy to the power-driven unit of the surveying instrument and so forth.

The portable casing may further comprise a terminal for electrical connection of the charging unit to a power outlet of an external power source, such as for example a power grid (or mains electricity) or a vehicle battery, and/or a photovoltaic system arranged on at least one side of the portable casing. The control unit may then be configured to cause the charging unit to transfer electrical energy received at the charging unit from the external power source, and/or the photovoltaic system, to the plurality of batteries for charging. As an example, the portable casing may be equipped with a power outlet for connection in a vehicle so that the batteries get charged while driving to e.g., a worksite. The portable casing may then work as a charger for the batteries.

The control unit of the portable casing may be configured to prioritize charging of the plurality of batteries from the external power source, and/or the photovoltaic system, based on the respective states of charge of the batteries. For example, the control unit may be configured to cause less discharged batteries to be charged before more discharged batteries.

Diverse functions may be implemented in the portable casing. For example, the portable casing may comprise a display unit configured to display at least one of: an indication of the respective states of charge of the plurality of batteries arranged in the compartments, the state of charge of a battery mounted in the surveying instrument (for example on a condition that the portable casing is electrically connected to the surveying instrument), an indication of which battery of the plurality of batteries has the highest state of charge, a selection mechanism for activation/deactivation of the inter-charging function as described above, and/or an indication that the state of charge of a battery is below a predetermined threshold, such as for example 25%.

According to a second aspect, a method for controlling charging of a plurality of batteries arranged in a portable casing for transporting a surveying instrument is provided. The method comprises obtaining information about the state of charge of each of the plurality of batteries, and controlling, based on the obtained information, an inter-charging function of the portable casing to cause, among batteries of the plurality of batteries that have a state of charge below a first threshold, a lesser discharged battery to receive electrical energy from at least one more discharged battery.

The technical effects and advantages discussed above in connection to the first aspect of the present disclosure and its various implementations apply also to the second aspect of the present disclosure. The different embodiments and implementations described above with reference to the first aspect of the present disclosure apply also the second aspect.

For example, the batteries having a state of charge above a second threshold may belong to a first group and the batteries having a state of charge below the second threshold may belong to a second group. The controlling may then include causing a battery of the second group to provide electrical energy to a battery of the first group.

Further, the controlling may include causing the least discharged battery to receive electrical energy from the other batteries of the plurality of batteries arranged in the casing.

The controlling may also include causing the more discharged battery to provide electrical energy to the lesser discharged battery until a discharging threshold for the state of charge of the more discharged battery is reached or until a charging threshold for the state of charge of the lesser discharged battery is reached.

The controlling may include causing the second most discharged battery to provide electrical energy to the least discharged battery on a condition that the state of charge of the most discharged battery has reached the discharging threshold and the state of charge of the least discharged battery has not reached the charging threshold.

Further, on a condition that the portable casing is electrically connected for providing power to a power-driven unit of the surveying instrument, electrical energy may be supplied to the power-driven unit from the batteries having the lowest states of charge first and subsequently from a less discharged battery.

Further, the method may comprise causing the most discharged battery to provide electrical energy to the power-driven unit of the surveying instrument until a discharging threshold for the state of charge of the most discharged battery is reached.

The method may further comprise causing charging of the plurality of batteries by transferring, to the plurality of batteries, electrical energy received at the portable casing from an external power source and/or a photovoltaic system of the portable casing. In this respect, the charging may include prioritizing charging of the plurality of batteries from the external power source, and/or the photovoltaic system, based on the respective states of charge of the batteries.

As for the first aspect of the present disclosure, the method may comprise displaying at least one of: an indication of the respective states of charge of the plurality of batteries arranged in the portable casing, the state of charge of a battery mounted in the surveying instrument (on a condition that the portable casing is electrically connected to the surveying instrument), an indication of which battery of the plurality of batteries has the highest state of charge, and/or an indication that the state of charge of a battery is below a predetermined threshold.

The present disclosure relates to all features recited in the claims and in the preceding embodiments. Further objects and advantages of the various embodiments of the present disclosure will be described below by means of exemplifying embodiments.

### BRIEF DESCRIPTION OF THE DRAWINGS

One or more embodiments will be described, by way of example only, and with reference to the following figures (which should not be considered as being to scale), in which:
Figure 1 schematically shows an example scenario of a long-term measurement to be performed by a surveying instrument,
Figures 2a and 2b, collectively referred to as "Figure 2" in the following, schematically show a side-view and a top-view of a portable casing in accordance with some embodiments,
Figure 3 is a general outline of a method according to some embodiments and also illustrates the general process flow of a control unit of a portable casing in accordance with some embodiments,
Figure 4 schematically illustrates the interconnection between elements of a portable casing, in accordance with some embodiments, and
Figure 5 illustrates the connection of a portable casing to a surveying instrument, in accordance with some embodiments.

Whilst the invention is susceptible to various modifications and alternative forms, specific embodiments are shown by way of example in the drawings as herein described in detail. It should be understood, however, that the detailed description herein and the drawings attached hereto are not intended to limit the invention to the particular form disclosed. Rather, the intention is to cover all alternatives falling within the scope of the appended claims.

Any reference to prior art documents or comparative examples in this specification is not to be considered as an admission that such prior art is widely known or forms part of the common general knowledge in the field.

As used in this specification, the words "comprise", "comprising", and similar words are not to be interpreted in the exclusive or exhaustive sense. In other words, they are intended to mean "including, but not limited to".

### DETAILED DESCRIPTION

The present invention is described in the following by way of a number of illustrative examples. It will be appreciated that these examples are provided for illustration and explanation only and are not intended to be limiting on the scope of the present invention. Instead, the scope of the present invention is to be defined by the appended claims. Furthermore, although the examples may be presented in the form of individual embodiments, it will be recognised that the invention also covers combinations of the embodiments described herein.

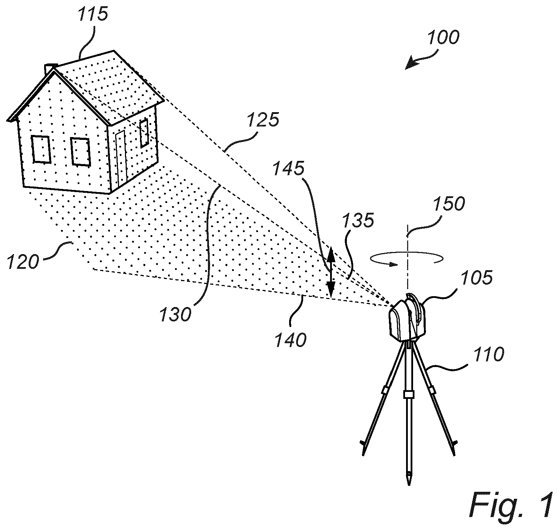

Figure 1 schematically illustrates an example scenario 1000 of operation of a surveying instrument 105. In this example, the surveying instrument 105 is a 3D laser scanner 105 mounted on a tripod 110 for taking measurements of a scene such as a building 115 and surroundings 120 to obtain a 3D cloud of measured points over vertical and azimuthal angular limits indicated by dashed lines 125, 130, 135, 140. The scanner 105 typically has a rotating mirror to scan the optical axis of the instrument (i.e., the EDM axis) at a high speed in a vertical direction 145. The rotating mirror is mounted on a scan head rotating azimuthally about an axis 150 at low speed. The EDM of the scanner 105 is free-running at a high repetition rate, and is not aimed at specific target locations. The elevation and azimuth of the telescope are recorded along with each distance measurement.

Such 3D scanning and other tasks (or sequence of tasks) to be run by a surveying instrument require that the surveying instrument is provided with power during a relatively long time. However, such tasks are most often performed at places where mains electricity is not available. The surveying instrument is therefore equipped with a cassette in which a battery is lodged for providing electrical power to the surveying instrument. When setting up the instrument for a new measurement, or a series of measurements, the surveyor usually introduces a new, fully charged, battery in the surveying instrument. Although not completely empty, batteries that have relatively low states of charge are not used by the surveyors. These batteries are brought back to the office for recharging.

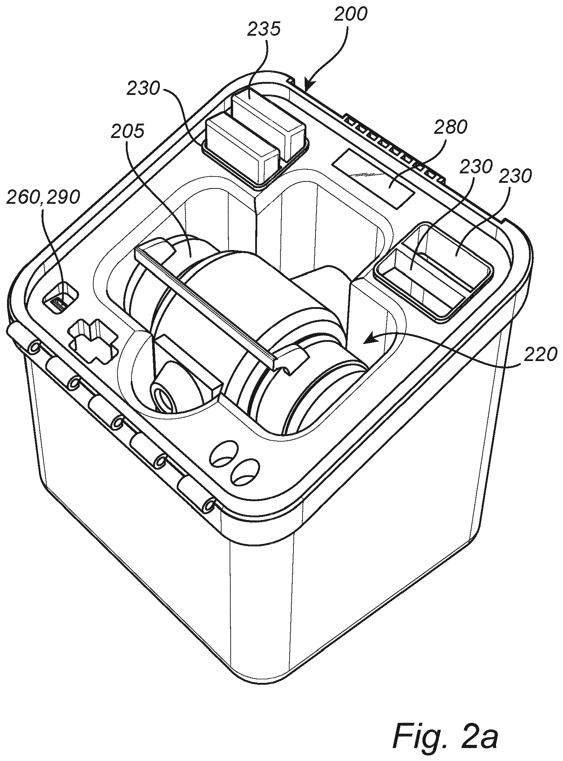

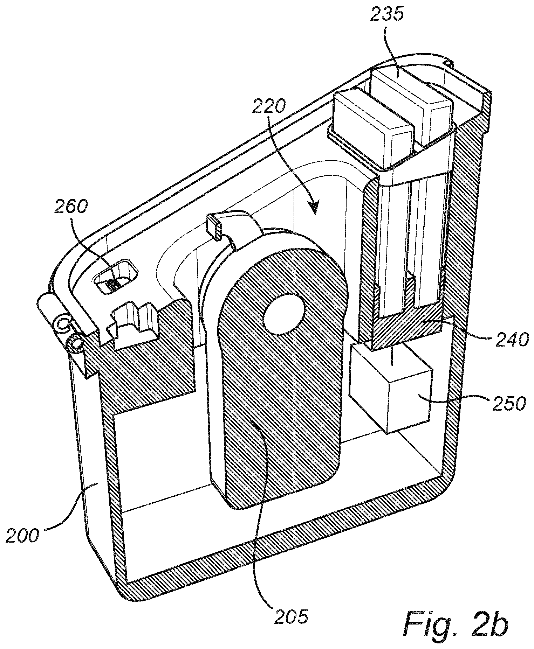

With reference to Figure 2, a portable casing in accordance with some embodiments of the present disclosure is described.

Figure 2 schematically shows a side-view and a top-view of a portable casing 200 for transporting the surveying instrument, for example to/from the place at which it is used. The portable casing 200 may also be referred to as, e.g., a portable storage box for transporting the surveying instrument or a portable protective case for safe transport and storage of the surveying instrument. The portable casing 200 may be provided with one or more handle (not shown) for carrying the portable casing. The main purpose of the portable casing 200 is therefore to facilitate transport, and provide protection under transport, of the surveying instrument and possibly some accompanying accessories.

As shown in Figure 2, the portable casing 200 includes a main, or primary, compartment (or section) 220 in which a surveying instrument 205, such as a geodetic scanner or a total station, may be lodged (or placed). The portable casing 200 may have different shapes. By way of example, Figure 2 illustrates a portable casing having the general form of a box. The portable case 200 includes a box body in which different compartments, including the primary compartment 220, are formed. Although not illustrated in Figure 2, the portable casing 200 may include a box cover for covering the box body. In some implementations, the portable casing may also be described as including a lower box body and an upper box body (corresponding to the box cover), which may be connected by a hinge such that the lower box body and the upper box body together form the box body. The upper box body may include recesses or may have a shape corresponding to the shape of the surveying instrument 205.

In addition to the primary compartment 220, the portable casing 200 may also include a plurality of secondary compartments 230 for housing a plurality of rechargeable batteries 235. In the example shown in Figure 2, the portable casing 200 includes four secondary compartments 230. As illustrated in Figure 2, two batteries 235 are inserted in two of these secondary compartments and two secondary compartments are empty. The rechargeable batteries may also be referred to as backup (or replacement) batteries. Each of the batteries 235 is adapted to be installed in the surveying instrument 205 for providing electrical power to the surveying instrument 205.

The portable casing 200 also includes a charging unit 240 which is electrically connected to the plurality of secondary compartments 230. The compartments, or inserts, in which the batteries 235 are placed may for example be equipped with electrical connections at their bottom such that the batteries are electrically connected to the charging unit 240 via these electrical connections. These electrical connections may be used for reading the respective states of charge of the batteries placed in the secondary compartments 230. Further, the electrical connections may be used for transferring electrical energy to and/or from the plurality of rechargeable batteries. For example, electrical energy may be transferred from one battery to another or from the mains electricity to one or more of the rechargeable batteries.

A control unit 250 of the portable casing 200 is configured to obtain information about the state of charge of each of the plurality of rechargeable batteries 235 arranged in the plurality of secondary compartments 230, and control, based on the obtained information, an inter-charging function of the charging unit 240 to cause, among batteries of the plurality of rechargeable batteries that have a state of charge below a first threshold, a lesser discharged battery to receive electrical energy from at least one more discharged battery.

By way of example, a scenario with four rechargeable batteries placed in the portable casing 200 is herein considered. A first battery has a state of charge (SoC) of 90%, while the second, third and fourth batteries have respective levels of charge (or SoC) of 70%, 40% and 25%. If the first threshold is set at, e.g., 80%, then the first battery will not be involved in the control provided by the control unit 250. In other words, the first battery will neither be charged nor discharged. If the first threshold is set at, e.g., 95% or 100%, then all four batteries will be involved.

Assuming that the first threshold is set at 95%, then the control unit 250 may be configured to cause the transfer of electrical energy from the batteries having lower states of charge (SoC), such as, for example, the third and fourth batteries having SoC of 40% and 25%, to the batteries having higher states of charge, i.e., the first and second batteries having SoC of 90% and 70%, respectively. In some implementations, the control unit 250 may be configured to group the batteries having a SoC above a second threshold, e.g., 50%, in a first group and the batteries having a SoC below the second threshold in a second group such that a battery of the second group (for example the third or fourth battery in the present example) is caused to provide electrical energy to a battery of the first group (for example the first or second battery).

In some implementations, the control unit 250 may be configured to cause the least discharged battery, i.e., the first battery having a SoC of 90%, to receive electrical energy from the other batteries arranged in the portable casing 200. Preferably, the control unit 250 may be configured to cause the most discharged battery, i.e., the fourth battery having a SoC of 25% in the present example, to provide electrical energy to the least discharged battery, i.e., the first battery.

Further, it will be appreciated that the control unit 250 may be configured to prevent the first battery from being charged above a certain charging threshold, which may be the same as the first threshold, i.e., 95% in the present example, since this may degrade the battery performance. Hence, should the SoC of the first battery reach 95%, the control unit may be configured to stop charging of the first battery and for example cause the fourth battery to transfer electrical energy to the second battery instead.

In addition, it will be appreciated that the control unit 250 may be configured to prevent the fourth battery from reaching a SoC below a certain discharging threshold, such as e.g. 10%, as this may otherwise degrade the battery. Hence, should the SoC of the fourth battery reach a SoC of 10%, the control unit 250 may be configured to stop the discharge of the fourth battery. Should the first battery still have a SoC below the charging threshold of 95%, the control unit 250 may then cause the second most discharged battery, i.e., the third battery having a SoC of 40% in the present example, to transfer electrical energy to the first battery.

The control unit 250 and the charging unit 240 provide therefore an inter-charging function wherein, instead of equalizing the SoC of the batteries, batteries having higher SoC, e.g., the battery having the highest SoC (as long as it is below a certain threshold), receive electrical energy from batteries having lower SoC, and in particular the most discharged battery first (as long as it is not below a discharging threshold).

Although described as two units, the charging unit and the control unit may in some applications be implemented in a single entity.

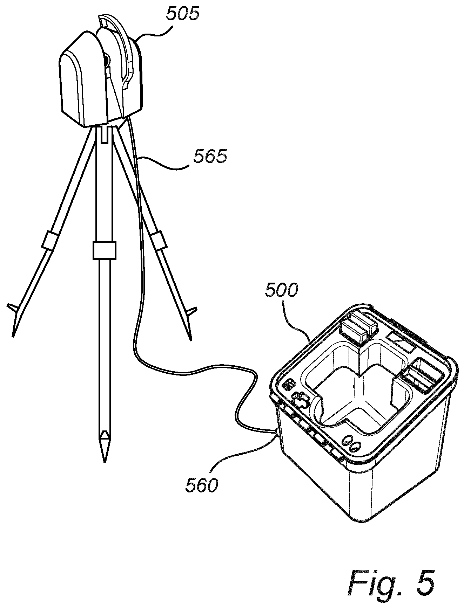

The portable casing 200 may also be equipped with a connector 260 for electrical connection of the charging unit to the surveying instrument, and in particular to a power-driven unit of the surveying instrument. This implementation will be further described below with reference to Figure 5.

The portable casing 200 may further comprise a terminal 290 for electrical connection of the charging unit 240 to a power outlet of an external power source, such as, for example, a power grid (or mains electricity) or a vehicle battery, and/or a photovoltaic system arranged on at least one side of the portable casing 200. As illustrated in Fig. 2a, the connector 260 used for electrical connection of the charging unit to the surveying instrument for providing power to the surveying instrument (i.e., used for discharging the batteries to a load) and the terminal 290 for electrical connection of the charging unit to an external power source (i.e., used for charging the batteries) may in some implementations be the same. For example, the connector/terminal 260, 290 may be a USB C/PD which supports transfer of electrical energy in both directions. In some other implementations, the connector 260 and the terminal 290 may be separate elements of the portable casing 200.

The control unit 250 may then be configured to cause the charging, via the charging unit 240, of the batteries placed in the portable casing 200 by transferring electrical energy received at the charging unit 240 from the external power source, and/or the photovoltaic system, to the plurality of batteries. In some implementations, the control unit 250 of the portable casing 200 may be configured to prioritize charging of the plurality of batteries 235 from the external power source, and/or the photovoltaic system, based on the respective states of charge of the batteries 235.

The portable casing 200 may also be equipped with a display unit 280 configured to display information relating to the batteries being placed within the portable casing 200. As shown in Figure 2, the display unit may be arranged in the lower box body such that, when the surveyor opens the casing 200 (or open the top cover), the display unit becomes visible. The display unit 280 may for example be configured to display an indication of the respective states of charge of the plurality of batteries arranged in the secondary compartments. The surveyor may then easily select a battery adapted for the measurement, or sequence of measurements, to be performed by the surveying instrument, and in particular easily identify the battery having the highest SoC. A dedicated indication may also be provided to identify the battery having the highest SoC. The display unit may also be configured to display the SoC of a battery mounted in the surveying instrument, for example on a condition that the portable casing is electrically connected to the surveying instrument. Accordingly, the surveyor may identify the need, or not, to replace the battery installed in the surveying instrument. The surveyor may then also identify whether the casing contains a battery that has a higher SoC than that of the battery installed in the surveying instrument.

Although Fig. 2a provides an example realization of a display unit at one place in the lower box body, other realizations of the display unit are possible. The display unit may for example be provided as several display subunits, wherein a display subunit is located close to a secondary compartment to provide information regarding the status, e.g., the SoC, of a battery arranged inside that secondary compartment. The display unit does not need to be a screen but may include any kind of indicator(s), for example using colors to indicate various charging levels. Such display subunits or indicators would preferably be visible to the operator when the portable casing is open.

The display unit may for example be a touchscreen, or be provided together with a selection mechanism, for activation/deactivation of the inter-charging function as described above. The display unit may also be configured to indicate that the state of charge of a battery is below a predetermined threshold, such as for example 25%.

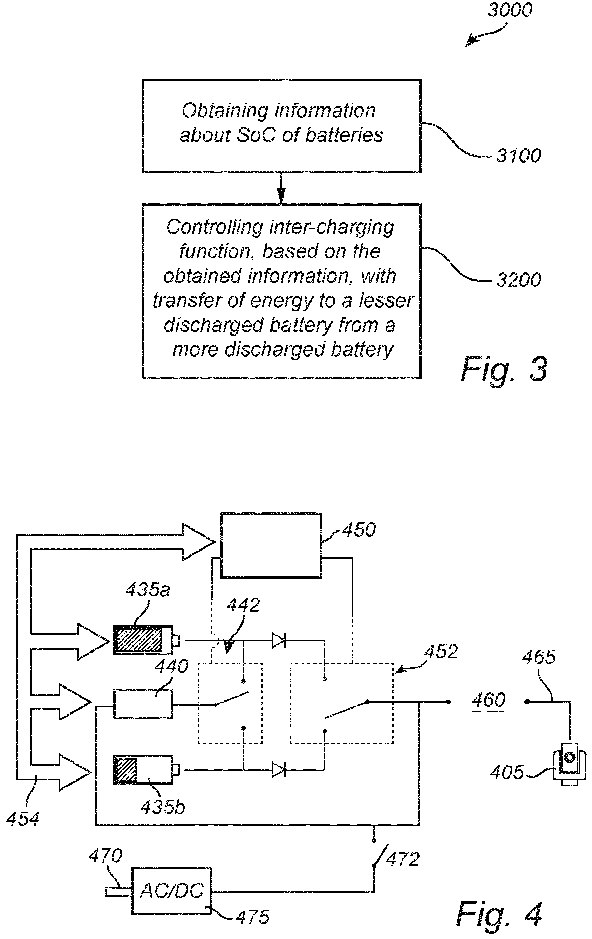

With reference to Figure 3, the general outline of a method according to some embodiments of the present disclosure is illustrated.

The method 3000 includes, at 3100, obtaining information about the state of charge of each of the plurality of batteries, and, at 3200, controlling, based on the obtained information, an inter-charging function of the portable casing to cause, among batteries of the plurality of batteries that have a state of charge below a first threshold, a lesser discharged battery to receive electrical energy from at least one more discharged battery.

The method 3000 can be implemented in the control unit 250 of the portable casing 200 described with reference to Figure 2. The method 3000 may also include all steps and actions of the control unit 250 (and more generally the portable casing 200) described above with reference to Figure 2.

In addition, in some implementations, the charging unit may be electrically connected to the first compartment for connection of the charging unit to a battery installed in the surveying instrument lodged in the primary compartment. The control unit may then be configured to control the inter-charging function among the batteries arranged in the secondary compartment and the battery arranged in the primary compartment.

With reference to Figure 4, the interconnection between some elements of a portable casing, in accordance with some embodiments, is schematically illustrated.

Figure 4 illustrates an example circuitry of a portable casing and in particular an example interconnection between a control unit (or microprocessor) 450, a charging unit 440 and batteries 435a and 435b arranged in a portable casing. The control unit 450 may be connected to the charging unit 440 and the batteries 435a and 435b via a system management bus (SMBUS) 454. The control unit 450 and the charging unit 440 of the portable casing may be configured to operate as described above with respect to Figures 1-3.

In the present example, the battery denoted 435a (also referred to as the first battery in the following) is represented as having a higher state of charge than the battery denoted 435b (also referred to as the second battery in the following). The batteries 435a and 435b may be connected to the charging unit (or battery charger) 440, for example, and if necessary, via a DC/DC converter (not shown) suitable for adapting the DC current and/or DC voltage to be transferred between the batteries 435a and 435b. Alternatively, the charging unit 440 may itself include one or more DC/DC converters for adapting the DC current and/or DC voltage to a level suitable for the batteries 435a and 435b.

The batteries 435a and 435b (or any sensor connected to the batteries) may also communicate, for example via the SMBUS 454, their respective states of charge to the control unit 450, for example by a measurement of their respective capacitance (such as via a measurement of a voltage).

Further, Figure 4 also shows a power outlet or terminal 470 for connection of the portable casing or circuitry to the mains electricity, for example via a switch or switching arrangement 472 and an AC/DC converter 475 for converting the alternate current power delivered by the mains electricity to direct current power. Although not specifically illustrated in Figure 4, the control unit 450 may be configured to control the switch 472 for causing the batteries 435a and 435b to receive electrical power, and thereby be charged, via the charging unit 440 using electrical energy received from the mains electricity. In some implementations, the connection of the portable casing or circuitry to the mains electricity is made via the switch 472, which forms a contact of the portable casing. In such case, the AC/DC converter 475 is not part of the portable casing or circuitry. In some other implementations, the portable casing may be equipped with its own AC/DC converter 475.

Further, the circuitry shown in Figure 4 includes switches or switching arrangements 442 and 452. The control unit 450 may be configured to control the first switch 442 (or first switching arrangement 442) for causing the charging unit 440 to charge the first battery 435b or the second battery 435a using electrical energy received from the AC/DC converter 475. As mentioned in some embodiments described with reference to the preceding figures, the control unit 450 may cause the batteries 435a and 435b to be charged according to their states of charge.

Further, the control unit 450 may cause the charging unit 440 to provide electrical power to a battery from another battery arranged in one of the secondary compartments, such as for example an exchange of power between the batteries 435a and 435b. In this respect, it will be appreciated that the switching arrangement 442 depicted in Figure 4 is only schematic and that the switching arrangement 442 may provide an electrical connection between the first battery 435a and the second battery 435b, via the charging unit 440, for causing the first battery 435a (having a higher state of charge) to receive electrical power from the second battery 435b (having a lower state of charge).

Figure 4 also illustrates that the portable casing may also be equipped with a power outlet or connector 460 for electrical connection of the portable casing to a surveying instrument 405, and in particular to a power-driven unit of the surveying instrument 405, via a power cable 465. This implementation will be further described below with reference to Figure 5.

The control unit 450 may control the switching arrangement 452 for causing the portable casing to provide power to the surveying instrument 405 from a specific battery installed in the portable casing. In the present example, the control unit 450 may be configured to control the switching arrangement 452 such that electrical power is provided first from the lower charged battery 435b (i.e., the second battery) and then from the higher charged battery (i.e., the first battery).

The electrical circuit or electrical connection of the elements of the portable casing shown in Figure 4 is schematic and simplified. For example, it will be appreciated that the portable casing may include more than two batteries such that when the switch 442 is activated to provide a connection between the charging unit 440 and the first battery 435a, electrical energy may be received at the charging unit from a third battery (not shown in Figure 4) having a lower state of charge than the state of charge of the second battery 435b (and that of the first battery 435a).

Further, Figure 4 shows that the circuitry may include diodes for protection of the batteries against reverse current. However, it will be appreciated that such diodes are optional and may be replaced by other components or circuits providing a similar function. Further, the polarities and any ground connection are not represented in Figure 4.

Further, the switches or switching arrangements 442 and 452 may be connected to each other or integrated to each other. The switches may also be equipped with further poles so that they are, in some states, not connected to any battery. The switches are controlled by the control unit 450 in accordance with the methods as described in any of the embodiments disclosed herein. Further, the control unit 450 may be configured to control the charging of the batteries so as to avoid, or at least reduce, any risk of short circuit.

With reference to Figure 5, the connection of a portable casing to a surveying instrument is illustrated, in accordance with some embodiments.

Figure 5 shows a surveying instrument 505 mounted on a tripod for performing land surveying measurements. The surveying instrument 505 may have been brought to the worksite (or place of measurement) using a portable casing 500 in which the surveying instrument 505 was stored. The portable casing 500 may be a portable casing as described above with reference to Figures 1-4. In particular, the portable casing 500 may be equipped with a connector 560 and may thereby be connected to the surveying instrument 505 via this connector 560 and a power cable 565.

On a condition that the portable casing 500 (and in particular its charging unit) is connected to the surveying instrument 505, the control unit of the portable casing may be configured to control the charging unit to supply electrical energy to the surveying instrument (and in particular a power-driven unit of the surveying instrument 505) from the batteries having the lowest states of charge first and subsequently from a less discharged battery.

The control unit of the portable casing 500 may, in some implementations, be configured to first use power from the batteries having the lowest states of charge and only subsequently use the more charged batteries (or less discharged ones), and particularly use the least discharged battery as a last resource of power.

Although the connector 560 may be arranged within the portable casing, in which case the portable casing 500 might need to remain opened, unless a passage is formed in the casing for introducing the power cable 565, the connector 560 may advantageously be positioned at an external side, such as e.g., the box cover, of the portable casing, in which case the portable casing can remain closed. The connector 560 (or connecting means) may include a physical connector, as shown in Figure 5, or may include a wireless/inductive charging connector.

The control unit may be configured to first cause the most discharged battery to provide electrical energy to the power-driven unit of the surveying instrument until a discharging threshold (which may be the same as the discharging threshold already mentioned above) for the state of charge of the most discharged battery is reached. It will be appreciated that the control unit may then be configured to cause the second most discharged battery to provide electrical energy to the power-driven unit of the surveying instrument and so forth.

It will be appreciated that, unless explicitly stated otherwise, the examples shown in different figures may be combined, and elements having like reference numerals in different figures may be the same or similar to each other. In any event, it is intended that the foregoing description not to be limiting upon the scope of the invention, and that the invention be defined only by the scope of the following claims.

## Claims

1. A method (3000) for controlling charging of a plurality of batteries arranged in a portable casing for transporting a surveying instrument, said method comprising:
obtaining (3100) information about the state of charge of each of the plurality of batteries,
the method being **characterized by**:
controlling (3200), based on the obtained information, an inter-charging function of said portable casing to cause, among batteries of said plurality of batteries that have a state of charge below a first threshold, a lesser discharged battery to receive electrical energy from at least one more discharged battery.

2. The method according to claim **1,** wherein the batteries having a state of charge above a second threshold belong to a first group and the batteries having a state of charge below said second threshold belong to a second group, wherein said controlling includes causing a battery of the second group to provide electrical energy to a battery of the first group.

3. The method according to claim 1 or 2, wherein the controlling includes causing the least discharged battery to receive electrical energy from the other batteries of said plurality of batteries arranged in said casing and/or wherein the controlling includes causing the most discharged battery to provide electrical energy to the least discharged battery.

4. The method according to any one of the preceding claims, wherein the controlling includes causing the more discharged battery to provide electrical energy to the lesser discharged battery until a discharging threshold for the state of charge of the more discharged battery is reached or until a charging threshold for the state of charge of the lesser discharged battery is reached.

5. The method according to claim 4, wherein the controlling includes causing the second most discharged battery to provide electrical energy to the least discharged battery on a condition that the state of charge of the most discharged battery has reached the discharging threshold and the state of charge of the least discharged battery has not reached the charging threshold.

6. The method according to any of the preceding claims, further comprising, on a condition that the portable casing is electrically connected for providing power to a power-driven unit of the surveying instrument, supplying electrical energy to the power-driven unit from the batteries having the lowest states of charge first and subsequently from a less discharged battery,
wherein the method optionally further comprises: causing the most discharged battery to provide electrical energy to the power-driven unit of the surveying instrument until a discharging threshold for the state of charge of the most discharged battery is reached.

7. The method according to any of the preceding claims, further comprising causing charging of the plurality of batteries by transferring, to the plurality of batteries, electrical energy received at the portable casing from an external power source and/or a photovoltaic system of the portable casing,
wherein the charging optionally includes prioritizing charging of the plurality of batteries from the external power source, and/or the photovoltaic system, based on the respective states of charge of the batteries.

8. The method according to any of the preceding claims, further comprising displaying (3300) at least one of: an indication of the respective states of charge of the plurality of batteries arranged in said portable casing, the state of charge of a battery mounted in the surveying instrument, an indication of which battery of said plurality of batteries has the highest state of charge, and/or an indication that the state of charge of a battery is below a predetermined threshold.

9. A portable casing (200) for transporting a surveying instrument (205), said portable casing comprising:
a primary compartment (220) for lodging the surveying instrument within said portable casing,
a plurality of secondary compartments (230) for housing a plurality of rechargeable batteries (235),
a charging unit (240) arranged in said casing and electrically connected to said plurality of secondary compartments for transferring electrical energy to and/or from said plurality of rechargeable batteries, and
a control unit (250) configured to perform the method defined in any one of claims 1-5.

10. The portable casing according to claim 9, further comprising a connector (260) for electrical connection of the charging unit to a power-driven unit of the surveying instrument and wherein, on a condition that the charging unit is connected to the power-driven unit, the control unit is configured to control the charging unit to supply electrical energy to the power-driven unit from the batteries arranged in the secondary compartments.

11. The portable casing according to claim 10, wherein the connector includes one of a physical connector and/or a wireless/inductive charging connector.

12. The portable casing according to any of claims 10-11, wherein the control unit is configured to first cause the most discharged battery to provide electrical energy to the power-driven unit of the surveying instrument until a discharging threshold for the state of charge of the most discharged battery is reached.

13. The portable casing according to any of claims 9-12, further comprising a terminal (470) for electrical connection of said charging unit to a power outlet of an external power source and/or a photovoltaic system arranged on at least one side of the portable casing, wherein the control unit is configured to cause the charging unit to transfer electrical energy received at said charging unit from the external power source, and/or the photovoltaic system, to the plurality of batteries for charging.

14. The portable casing according to claim 13, wherein the control unit is configured to prioritize charging of the plurality of batteries from the external power source, and/or the photovoltaic system, based on the respective states of charge of the batteries.

15. The portable casing according to any of claims 9-14, further comprising a display unit (280) configured to display at least one of: an indication of the respective states of charge of the plurality of batteries arranged in said secondary compartments, the state of charge of a battery mounted in the surveying instrument, an indication of which battery of said plurality of batteries has the highest state of charge, a selection mechanism for activation/deactivation of the inter-charging function defined in claims 9-14, and/or an indication that the state of charge of a battery is below a predetermined threshold.

## Patentansprüche

1. Verfahren (3000) zum Steuern des Ladens mehrerer Batterien, die in einem tragbaren Gehäuse zum Transportieren eines Vermessungsinstruments angeordnet sind, wobei das Verfahren umfasst:
Erhalten (3100) von Informationen über den Ladezustand jeder der mehreren Batterien,
wobei das Verfahren **gekennzeichnet ist durch**:
Steuern (3200) einer Zwischenladefunktion des tragbaren Gehäuses auf Grundlage der erhaltenen Informationen, um zu bewirken, dass von den Batterien der mehreren Batterien, die einen Ladezustand unterhalb eines ersten Schwellenwerts aufweisen, eine weniger entladene Batterie elektrische Energie von mindestens einer mehr entladenen Batterie empfängt.

2. Verfahren nach Anspruch 1, wobei die Batterien, die einen Ladezustand oberhalb eines zweiten Schwellenwerts aufweisen, zu einer ersten Gruppe gehören und die Batterien, die einen Ladezustand unterhalb eines zweiten Schwellenwerts aufweisen, zu einer zweiten Gruppe gehören, wobei das Steuern umfasst, dass bewirkt wird, dass eine Batterie der zweiten Gruppe einer Batterie der ersten Gruppe elektrische Energie bereitstellt.

3. Verfahren nach Anspruch 1 oder 2, wobei das Steuern umfasst, dass bewirkt wird, dass die am wenigsten entladene Batterie elektrische Energie von den anderen Batterien der in dem Gehäuse angeordneten mehreren Batterien empfängt, und/oder wobei das Steuern umfasst, dass bewirkt wird, dass die am meisten entladene Batterie der am wenigsten entladenen Batterie elektrische Energie bereitstellt.

4. Verfahren nach einem der vorhergehenden Ansprüche, wobei das Steuern umfasst, dass bewirkt wird, dass die stärker entladene Batterie der weniger entladenen Batterie elektrische Energie bereitstellt, bis ein Entladeschwellenwert für den Ladezustand der stärker entladenen Batterie erreicht ist oder bis ein Ladeschwellenwert für den Ladezustand der weniger entladenen Batterie erreicht ist.

5. Verfahren nach Anspruch 4, wobei das Steuern umfasst, dass bewirkt wird, dass die am zweitstärksten entladene Batterie der am wenigsten entladenen Batterie elektrische Energie bereitstellt, wenn der Ladezustand der am stärksten entladenen Batterie den Entladeschwellenwert erreicht hat und der Ladezustand der am wenigsten entladenen Batterie den Ladeschwellenwert nicht erreicht hat.

6. Verfahren nach einem der vorhergehenden Ansprüche, ferner umfassend, wenn das tragbare Gehäuse elektrisch verbunden wird, um einer strombetriebenen Einheit des Vermessungsinstruments Strom zu liefern, Zuführen von elektrischer Energie zu der strombetriebenen Einheit zuerst aus den Batterien, die die niedrigsten Ladezustände aufweisen, und anschließend aus einer weniger entladenen Batterie,
wobei das Verfahren gegebenenfalls umfasst: Bewirken, dass die am stärksten entladene Batterie der strombetriebenen Einheit des Vermessungsinstruments elektrische Energie liefert, bis ein Entladeschwellenwert für den Ladezustand der am stärksten entladenen Batterie erreicht ist.

7. Verfahren nach einem der vorhergehenden Ansprüche, ferner umfassend Bewirken des Ladens der mehreren Batterien durch Übertragen von elektrischer Energie, die an dem tragbaren Gehäuse von einer externen Stromquelle und/oder einem Photovoltaiksystem des tragbaren Gehäuses empfangen wird, an die mehreren Batterien,
wobei das Laden gegebenenfalls Priorisieren des Ladens der mehreren Batterien aus der externen Stromquelle und/oder dem Photovoltaiksystem auf Grundlage der jeweiligen Ladezustände der Batterien umfasst.

8. Verfahren nach einem der vorhergehenden Ansprüche, ferner umfassend Anzeigen (3300) von mindestens einem aus: einer Angabe der jeweiligen Ladezustände der mehreren Batterien, die in dem tragbaren Gehäuse angeordnet sind, dem Ladezustand einer Batterie, die in dem Vermessungsinstrument montiert ist, einer Angabe, welche Batterie der mehreren Batterien den höchsten Ladezustand aufweist, und/oder einer Angabe, dass der Ladezustand einer Batterie unter einem vorgegebenen Schwellenwert liegt.

9. Tragbares Gehäuse (200) zum Transportieren eines Vermessungsinstruments (205), wobei das tragbare Gehäuse aufweist:
ein Hauptfach (220) zum Unterbringen des Vermessungsinstruments innerhalb des tragbaren Gehäuses,
mehrere Nebenfächer (230) zum Beherbergen mehrerer wiederaufladbarer Batterien (235),
eine Ladeeinheit (240), welche in dem Gehäuse angeordnet ist und elektrisch mit den mehreren Nebenfächern verbunden ist, zum Übertragen von elektrischer Energie zu und/oder von den mehreren wiederaufladbaren Batterien, und
eine Steuereinheit (250), konfiguriert zum Durchführen des Verfahrens, das in einem der Ansprüche 1 bis 5 definiert ist.

10. Tragbares Gehäuse nach Anspruch 9, welches ferner einen Verbinder (260) für eine elektrische Verbindung der Ladeeinheit mit einer strombetriebenen Einheit des Vermessungsinstruments aufweist und wobei, wenn die Ladeeinheit mit der strombetriebenen Einheit verbunden wird, die Steuereinheit dazu konfiguriert ist, die Ladeeinheit zu steuern, elektrische Energie aus den Batterien, die in den Nebenfächern angeordnet sind, an die strombetriebene Einheit zu liefern.

11. Tragbares Gehäuse nach Anspruch 10, wobei der Verbinder eines aus einem physischen Verbinder und/oder einem drahtlosen/induktiven Ladeverbinder umfasst.

12. Tragbares Gehäuse nach einem der Ansprüche 10 bis 11, wobei die Steuereinheit dafür konfiguriert ist, zunächst zu bewirken, dass die am stärksten entladene Batterie elektrische Energie an die strombetriebene Einheit des Vermessungsinstruments zu liefern, bis ein Entladeschwellenwert für den Ladezustand der am meisten entladenen Batterie erreicht ist.

13. Tragbares Gehäuse nach einem der Ansprüche 9 bis 12, welches ferner einen Anschluss (470) für eine elektrische Verbindung der Ladeeinheit mit einem Stromausgang einer externen Stromquelle und/oder eines Photovoltaiksystems aufweist, der auf mindestens einer Seite des tragbaren Gehäuses angeordnet ist, wobei die Steuereinheit dafür konfiguriert ist zu bewirken, dass die Ladeeinheit elektrische Energie, die aus der externen Stromquelle und/oder dem Photovoltaiksystem an der Ladeeinheit empfangen wird, zum Laden an die mehreren Batterien überträgt.

14. Tragbares Gehäuse nach Anspruch 13, wobei die Steuereinheit dafür konfiguriert ist, ein Laden der mehreren Batterien aus der externen Stromquelle und/oder dem Photovoltaiksystem auf Grundlage der jeweiligen Ladezustände der Batterien zu priorisieren.

15. Tragbares Gehäuse nach einem der Ansprüche 9 bis 14, welches ferner eine Anzeigeeinheit (280) aufweist, die dafür konfiguriert ist, mindestens eines anzuzeigen aus: einer Angabe der jeweiligen Ladezustände der mehreren Batterien, die in den Nebenfächern angeordnet sind, dem Ladezustand einer Batterie, die in dem Vermessungsinstrument montiert ist, einer Angabe, welche Batterie der mehreren Batterien den höchsten Ladezustand aufweist, einem Auswahlmechanismus zur Aktivierung/Deaktivierung der Zwischenladefunktion, die in Anspruch 9 bis 14 definiert ist, und/oder einer Angabe, dass der Ladezustand einer Batterie unter einem vorgegebenen Schwellenwert liegt.

## Revendications

1. Procédé (3000) de commande du chargement d'une pluralité de batteries agencées dans un boîtier portable pour transporter un instrument d'arpentage, ledit procédé comprenant :
l'obtention (3100) d'informations sur l'état de charge de chacune de la pluralité de batteries,
le procédé étant **caractérisé par** :
la commande (3200), en se basant sur les informations obtenues, d'une fonction d'inter-chargement dudit boîtier portable pour faire, parmi des batteries de ladite pluralité de batteries qui ont un état de charge en-dessous d'un premier seuil, qu'une batterie moins déchargée, reçoive de l'énergie électrique d'au moins une batterie plus déchargée .

2. Procédé selon la revendication 1, dans lequel les batteries ayant un état de charge au-dessus d'un second seuil appartiennent à un premier groupe, et les batteries ayant un état de charge en-dessous dudit second seuil appartiennent à un second groupe, dans lequel ladite commande inclut de faire qu'une batterie du second groupe fournisse de l'énergie électrique à une batterie du premier groupe.

3. Procédé selon la revendication 1 ou 2, dans lequel la commande inclut de faire que les batteries les moins déchargées reçoivent de l'énergie électrique des autres batteries de ladite pluralité de batteries agencées dans ledit boîtier et/ou dans lequel la commande inclut de faire que la batterie la plus déchargée fournisse de l'énergie électrique à la batterie la moins déchargée.

4. Procédé selon l'une quelconque des revendications précédentes, dans lequel la commande inclut de faire que la batterie plus déchargée fournisse de l'énergie électrique à la batterie moins déchargée jusqu'à ce qu'un seuil de déchargement pour l'état de charge de la batterie plus déchargée soit atteint ou jusqu'à ce qu'un seuil de chargement pour l'état de charge de la batterie moins déchargée soit atteint.

5. Procédé selon la revendication 4, dans lequel la commande inclut de faire que la deuxième batterie la plus déchargée fournisse de l'énergie électrique à la batterie la moins déchargée à condition que l'état de charge de la batterie la plus déchargée ait atteint le seuil de décharge et que l'état de charge de la batterie la moins déchargée n'ait pas atteint le seuil de chargement.

6. Procédé selon l'une quelconque des revendications précédentes, comprenant en outre, à condition que le boîtier portable soit connecté électriquement pour fournir du courant électrique à une unité à fonctionnement électrique de l'instrument d'arpentage, de fournir de l'énergie électrique à l'unité à fonctionnement électrique venant des batteries ayant les états de charge les plus faibles en premier et à la suite d'une batterie moins déchargée,
dans lequel le procédé comprend en outre en option : de faire que la batterie la plus déchargée fournisse de l'énergie électrique à l'unité à fonctionnement électrique de l'instrument d'arpentage jusqu'à ce qu'un seuil de déchargement pour l'état de charge de la batterie la plus déchargée soit atteint.

7. Procédé selon l'une quelconque des revendications précédentes, comprenant en outre de provoquer le chargement de la pluralité de batteries en transférant, à la pluralité de batteries, l'énergie électrique reçue sur le boîtier portable d'une source de courant électrique externe et/ou d'un système photovoltaïque du boîtier portable,
dans lequel le chargement inclut en option de rendre prioritaire le chargement de la pluralité de batteries de la source de courant électrique, et/ou du système photovoltaïque, en se basant sur les états de charge respectifs des batteries.

8. Procédé selon l'une quelconque des revendications précédentes, comprenant en outre d'afficher (3300) au moins un de : une indication des états de charge respectifs de la pluralité de batteries agencées dans ledit boîtier portable, l'état de charge d'une batterie montée dans l'instrument d'arpentage, une indication de quelle batterie de ladite pluralité de batteries a l'état de charge le plus élevé et/ou une indication que l'état de charge d'une batterie est en-dessous d'un seuil prédéterminé.

9. Boîtier portable (200) pour transporter un instrument d'arpentage (205), ledit boîtier portable comprenant :
un compartiment principal (220) pour loger l'instrument d'arpentage à l'intérieur dudit boîtier portable,
une pluralité de compartiments secondaires (230) pour loger une pluralité de batteries rechargeables (235),
une unité de chargement (240) agencée dans ledit boîtier et connectée électriquement à ladite pluralité de compartiments secondaires pour transférer l'énergie électrique à et/ou de ladite pluralité de batteries rechargeables, et
une unité de commande (250) configurée pour exécuter le procédé défini selon l'une quelconque des revendications 1-5.

10. Boîtier portable selon la revendication 9, comprenant en outre un connecteur (260) pour la connexion électrique de l'unité de chargement à une unité à fonctionnement électrique de l'instrument d'arpentage et dans lequel, à condition que l'unité de chargement soit connectée à l'unité à fonctionnement électrique, l'unité de commande est configurée pour commander l'unité de chargement à fournir de l'énergie électrique à l'unité à fonctionnement électrique venant des batteries agencées dans les compartiments secondaires.

11. Boîtier portable selon la revendication 10, dans lequel le connecteur inclut un d'un connecteur physique et/ou d'un connecteur de chargement sans fil/inductif.

12. Boîtier portable selon l'une quelconque des revendications 10-11, dans lequel l'unité de commande est configurée pour faire en premier que la batterie la plus déchargée fournisse de l'énergie électrique à l'unité à fonctionnement électrique de l'instrument d'arpentage jusqu'à ce qu'un seuil de déchargement pour l'état de charge de la batterie la plus déchargée soit atteint.

13. Boîtier portable selon l'une quelconque des revendications 9-12, comprenant en outre une borne (470) pour la connexion électrique de ladite unité de chargement à une sortie de courant électrique d'une source de courant électrique externe et/ou d'un système photovoltaïque agencé sur au moins un côté du boîtier portable, dans lequel l'unité de commande est configurée pour faire que l'unité de chargement transfère l'énergie électrique reçue sur ladite unité de chargement de la source de courant électrique externe et/ou du système photovoltaïque, à la pluralité de batteries pour le chargement.

14. Boîtier portable selon la revendication 13, dans lequel la seconde unité est configurée pour rendre prioritaire le chargement de la pluralité de batteries depuis la source de courant externe et/ou le système photovoltaïque, en se basant sur les états de charge respectifs des batteries.

15. Boîtier portable selon l'une quelconque des revendications 9-14, comprenant en outre une unité d'affichage (280) configurée pour afficher au moins un de : une indication des états de charge respectifs de la pluralité de batteries agencées dans lesdits compartiments secondaires, l'état de charge d'une batterie montée dans l'instrument d'arpentage, une indication de quelle batterie de ladite pluralité de batteries a l'état de charge le plus élevé, un mécanisme de sélection pour l'activation/désactivation de la fonction d'inter-chargement définie dans les revendications 9-14, et/ou une indication que l'état de charge d'une batterie est en-dessous d'un seuil prédéterminé.
